# EUROPÄISCHE PATENTSCHRIFT

(11) **EP 2 869 286 B1**
(45) Veröffentlichungstag und Bekanntmachung des Hinweises auf die Patenterteilung: **28.02.2018**
(21) Anmeldenummer: 14401102.0
(22) Anmeldetag: 30.10.2014
(51) Int. Cl.: G09B 23/28

(54) **Modell zum Trainieren einer Untersuchung und/oder Behandlung von Läsionen im Verdauungstrakt**
Model for training for an examination of and/or treatment of lesions in the digestive tract
Modèle d'entraînement d'un examen et/ou un traitement de lésions dans le tractus digestif

(30) Priorität: 30.10.2013 DE 102013111983
(43) Veröffentlichungstag der Anmeldung: 06.05.2015
(73) Patentinhaber: Frimberger, Eckart, 80804 München (DE)
(72) Erfinder: Frimberger, Eckart, 80804 München (DE)
(74) Vertreter: Eder, Christian

(56) Entgegenhaltungen:
- WO-A2-2007/149519
- DE-A1-102007 008 205
- GB-A- 2 328 068
- US-A1- 2005 181 342
- US-A1- 2013 157 240

## Beschreibung

Die Erfindung betrifft ein Modell zum Trainieren einer Untersuchung und/oder Behandlung (insbesondere Biopsie, Polypektomie, Clip setzen) von Läsionen im Verdauungstrakt sowie ein Modell einer Läsion zum Einsatz in einem solchen Trainingsmodell bzw. Trainingssimulator.

Der menschliche Verdauungstrakt bzw. Gastrointestinaltrakt (GIT) umfasst Speiseröhre (Ösophagus), Magen, Dünndarm einschließlich Zwölffingerdarm (Duodenum), Dickdarm (Colon) und Enddarm (Rektum) mit Darmausgang (Analkanal). Die Anatomie der Tiere ist ähnlich angelegt. Bei der gastrointestinalen Endoskopie geht es vorwiegend um die Erkennung (Diagnostik) und Behandlung (Therapie) im Bereich des GIT. Krankhafte Veränderungen im Bereich des GIT, die vorwiegend an der lumenseitigen Oberfläche des GIT, also der Schleimhaut (Mukosa), auftreten, werden häufig mit dem Oberbegriff "Läsionen" zusammengefasst. Derartige Läsionen repräsentieren einen Großteil der Gewebeveränderungen oder -formationen des GIT.

Läsionen unterscheiden sich durch Farbe und/oder Konsistenz und/oder Form von der normalen umgebenden Oberfläche; Läsionen können Schleimhautdefekte (Ulzera, Geschwüre) sein oder aus dem Schleimhautniveau vorspringende Formationen (Polypen, Tumoren). Sie können aus der inneren Schicht des Verdauungstraktes (Hohlorgan), der Schleimhaut (Mukosa), oder einer anderen, tieferen Schicht der Wand des GIT entstanden sein. Läsionen können spontan oder nach einer endoskopisch durchgeführten Maßnahme, wie beispielsweise der Polypektomie, bluten.

Ein Polyp, der durch krankhaftes Wachstum im Bereich der Schleimhaut entsteht, wird daher auch als polypoide Läsion bezeichnet. Eine blutende Stelle, beispielsweise ein blutender Polyp oder ein Geschwür (Ulcus) oder ein blutendes, "geplatztes" Blutgefäß im Bereich der Schleimhaut, wird im Folgenden als "Blutungs-Läsion" bezeichnet.

Damit Ärzte und andere Personen, die mit der Endoskopie des GIT befasst sind, diese Methode nicht primär am Patienten erlernen müssen, werden Modelle bzw. Simulatoren für das Endoskopietraining entwickelt. Trainingsmodelle bilden Organe und krankhafte Läsionen nach, damit sich Trainees bzw. Übungspersonen (Endoskopiker) mit den endoskopischen Techniken vertraut machen können. Bekannte mechanische Simulatoren bestehen im humanmedizinischen Bereich meist aus einem menschlichen Torso (Puppe, Manikin), in den die trainingsrelevanten (Hohl-)Organe, z.B. Dickdarm, Magen eingesetzt werden. Der Dickdarm wird beispielsweise durch einen einem Staubsaugerschlauch nachempfundenen Spiralschlauch simuliert, wobei die Organnachbildungen meist aus Gummi, Latex oder Silikongummi hergestellt werden. Eine einfache Alternative zum Torso besteht in einer Platte, auf welche die nachgebildeten Organe montiert werden.

Damit die unterschiedliche Lagerung des Patienten - Seitenlage, Rückenlage, Bauchlage - simuliert werden kann, können Torsos und Halterungsplatten teils um eine (Körper-)Längsachse gedreht werden. In der DE 19716341 C2 wird weiter vorgeschlagen, Organe oder resektionsfähige Abschnitte sowie Polypen aus Hydrogel zu bilden. Um die physikalischen Effekte, die ein Schneiden bei der Hochfrequenz-Chirurgie (HF-Chirurgie) ermöglichen, nachzubilden, sind diesem Hydrogel ein Elektrolyt, insbesondere Natriumchlorid, und brennbare Fasern (Baumwolle, Leinen) beigemischt. Um eine Blutungsquelle zu simulieren, kann über eine in die Organwand eingesetzte Kanüle blutungssimulierende Flüssigkeit austreten. Zum Einsetzen in Organteile, wie beispielsweise Colon oder Magen, wird eine Kanüle oder ein tierisches Blutgefäss in die künstlich angebrachte (Skalpellstich) kleine Öffnung in der Organwand eingesetzt und durch Naht fixiert. Weitere Trainingsmodelle werden in den Dokumenten US 2013/0157240 A1, GB 2328068 A, WO 2007/149519 A2, US 2005/0181342 A2 und DE10 2007008205 A1 offenbart.

Nachteiligerweise sind derartige Trainingsmodelle aufwändig gestaltet und bedürfen für eine Verwendung einer zeit- und kostenintensiven Aufbereitung zur Herstellung - insbesondere nach einem durchgeführten Training - eines Anfangszustandes. Zudem sind mit den bekannten Trainingsmodellen die tatsächlich für einen Endoskopiker erforderlichen oder zumindest erwünschten Fertigkeiten nicht oder nur schwer erlernbar. Grund hierfür ist eine fehlende Simulation von tatsächlichen Gegebenheiten, insbesondere im Bereich der unterschiedlichen Gestaltungen von Läsionen.

Der vorliegenden Erfindung liegt daher die Aufgabe zugrunde, ein Trainingsmodell für eine Untersuchung und/oder Behandlung von Läsionen im Verdauungstrakt von Mensch und Tier sowie ein Modell einer Läsion zum Einsatz in einem solchen Trainingsmodell zu schaffen, welches eine verbesserte Simulation der tatsächlichen Gegebenheiten ermöglicht und den Aufwand in Zeit und Kosten für einen Einsatz, insbesondere erneuten Einsatz, niedrig hält.

Diese Aufgabe wird erfindungsgemäß durch ein Läsionsmodell mit den Merkmalen des Anspruchs 1 sowie eine Anordnung mit den Merkmalen des Anspruchs 10 gelöst.

Die erfindungsgemäße Wiederverwendbarkeit wenigstens eines Teils des Läsionsmodells ermöglicht vorteilhafterweise die Ausbildung von aufwändigen (Läsions-) Modellen, insbesondere deren (Kopf-)Formen. Trotz eines möglicherweise erhöhten Aufwands und erhöhter Kosten bei der Herstellung der erfindungsgemäßen Läsion bzw. des Läsionsmodells, können durch deren (zumindest teilweise) Wiederverwendbarkeit die Kosten und der Aufwand über eine Anzahl von mehreren Einsätzen gering gehalten werden. Zudem ist es hierdurch möglich, aufwändig gestaltete Läsionen, insbesondere Modelle von Polypenkopfformen, zu realisieren, die bisher nicht möglich waren. Hierdurch können nicht nur in vivo vorkommende Kopfformen nachgebildet werden, sondern auch zumindest bisher nicht beobachtete (Kunst-)Formen realisiert werden, insbesondere, um die Fertigkeit einer Übungsperson (Endoskopiker) zu trainieren und zu verbessern.

In bevorzugter Ausgestaltung der Erfindung ist wenigstens ein Teil (insbesondere ein wiederverwendbarer Kopfbereich) des Läsionsmodells aus einem (ausreichend) formstabilen Stoff gefertigt. Da dieser Stoff nicht elektrochirurgisch schneidbar sein muss kommen daher eine ganze Reihe elektrochirurgisch nicht schneidbarer, formstabiler Stoffe, insbesondere synthetische Stoffe wie beispielsweise Kunststoff (inkl. Silikon), Stoffe auf natürlicher Basis wie beispielsweise Gummi, Naturkautschuk, Latex, organische Stoffe wie beispielsweise Leder, Holz oder Verbundstoffe (insbesondere Kohlenstofffaserverstärkte Kunststoffe), in Frage. Hierdurch können beispielsweise unterschiedlichste Formen von Auswüchsen (Erweiterungen) von Läsionen, im Folgenden Köpfe genannt (beispielsweise ein Kopf oder Kopfbereich eines Polypen) ausgebildet werden. So lassen sich beispielsweise kompliziertere Formen, wie beispielsweise Noppen, Stacheln, Falten oder Scheiben (mittels Gießen, Pressen, nachträgliches Bearbeiten wie Fräsen, Schneiden etc.) von Polypenstielen und insbesondere von unterschiedlichsten Formen von Polypenköpfen (gestielt oder sessil) realisieren.

In einer besonderen Ausgestaltung der Erfindung weist das Läsionsmodell wenigstens einen (außen angeordneten oder innerhalb befindlichen) - vorzugsweise innenliegenden - Kanal auf. Der Kanal besteht vorzugsweise aus dem gleichen Material wie das Läsionsmodell bzw. der Teil oder die Komponente des Läsionsmodells (insbesondere Stiel), in welchem er sich befindet. Der Kanal besteht oder entsteht (in Form einer Aussparung des umgebenden Materials) vorteilhafterweise bereits bei der Herstellung des Läsionsmodells bzw. oder wenigstens einer Komponente hiervon und wird nicht erst später durch Einbringen von zusätzlichem Material, beispielsweise durch ein Einstechen einer Kanüle aus Metall oder Kunststoff, eingesetzt. Durch einen derartigen Kanal ist es nunmehr auf unterschiedliche Arten sogar möglich, eine Blutungs-Läsion (also eine spontan auftretende oder nach einem Eingriff auftretende Blutung, beispielsweise nach einer Biopsie oder einer Polypektomie) zu simulieren. Hierzu kann der Kanal mit beispielsweise roter Flüssigkeit gefüllt, insbesondere mit einer Pumpe versorgt werden, so dass eine Blutung durch ein Austreten der Flüssigkeit aus einem offenen oder geöffneten Kanal sehr realitätsnah nachgebildet werden kann. Hierzu kann der Kanal (aus formstabilen Material wie beispielsweise Kunststoff, Gummi oder tierischem Material) eine Austrittsöffnung aufweisen, deren Verschließen zur Simulation einer Blutstillungsmaßnahme von einem Endoskopiker mittels geeigneter Mittel, wie beispielsweise Clips oder Schlinge, trainiert werden kann. Diese Mittel können nach einem Training wieder entfernt werden (beispielsweise mittels einer Biopsiezange o.ä.), so dass auch diese Ausführungsform für weitere Trainees wiederverwendbar ist. Im Falle der Simulation einer Polypektomie tritt die Blutungssimulation erst nach einem echten oder simulierten Schneiden auf, was nachfolgend erläutert wird.

Es ist aber auch denkbar, in dem Kanal mittels geeigneter Druckquelle (Pumpvorrichtung, Druckkammer, Gasflasche, etc.) einen im Vergleich zur Umgebung höheren oder geringeren Flüssigkeits- oder Gasdruck, insbesondere Luftdruck, zu erzeugen und den Druck, insbesondere hinsichtlich einer Druckänderung, beispielsweise mittels eines im Kanal, im Anschluss oder an der Pumpe selbst angeordneten Drucksensors, zu überwachen. Bei einer einer Blutung entsprechenden Änderung des Drucks (oder Einstellung eines vordefinierten Druckwertes oder -bereiches) könnte diese Blutung dann permanent oder intervallartig optisch und/oder akustisch angezeigt (oder eventuell auch olfaktorisch dargestellt) werden, bis durch eine weitere - einer erfolgreichen blutstillenden Maßnahme entsprechende - Druckänderung (oder Einstellung eines vordefinierten Druckwertes oder -bereiches) die Anzeige wieder mittels einer entsprechenden Schaltung oder Steuerung erlischt bzw. abgeschaltet wird.

Um eine optische Anzeige auch innerhalb des Trainingsmodells bzw. in einem Bereich eines vorzugsweise nachgebildeten (Hohl-)Organs und damit durch die Optik eines eingeführten Endoskops zu realisieren, ist in einer weiteren Ausgestaltung der Erfindung außen an einem (Organ-)Bereich (des vorzugsweise nachgebildeten Abschnitts des Verdauungstraktes) oder an dem Läsionsmodell (oder in dem Bereich) oder in dem Läsionsmodell ein Leuchtmittel oder eine lichtführende Einrichtung, beispielsweise wenigstens eine LED oder wenigstens ein Lichtleiter/Glasfaser angeordnet, so dass das in das Innere des Bereiches emittierte Licht für eine Übungsperson durch die Optik des Endoskops, vorzugsweise an oder unmittelbar im Bereich des Läsionsmodells, wahrgenommen werden kann. Hierdurch kann auf einfache und effektive Art und Weise eine auftretende Blutung simuliert werden.

Um eine auftretende Blutung zu stillen ist es u. a. Aufgabe des Endoskopikers, das oder die Blutgefäße an der Stelle der Blutung beispielsweise mittels Clip, Schlinge, Koagulationssonde, Laser, etc., zu verschließen. Wird während eines Trainings der Kanal an seiner offenen Stelle durch einen Endoskopiker erfolgreich durch Setzen eines Clips oder einer Schlinge verschlossen, tritt keine Flüssigkeit mehr aus.

In der Ausgestaltung mit Detektieren der Druckänderung bzw. des Druckwertes oder des Druckbereiches wird das bisher ausgelöste Signal abgestellt, um den Erfolg des Trainings (in diesem Fall Erfolg der trainierten Blutstillung) anzuzeigen. Selbstverständlich ist es auch denkbar, beide Ausführungsformen miteinander zu verbinden, so dass infolge der Flüssigkeit und der Drucküberwachung sowohl das Auslösen/Einstellen des Signals als auch das lumenseitige Auftreten/Ausbleiben von Flüssigkeit die verschiedenen Stufen des Trainings anzeigt.

Das Läsionsmodell einer Blutungs-Läsion kann in besonders vorteilhafter Ausgestaltung der Erfindung jedoch nicht nur zum Trainieren der Blutungsstillungsmaßnahme, sondern auch zum Trainieren der Ektomie der Läsion, insbesondere Polypektomie, verwendet werden. Hierzu besteht - ebenso wie im Falle eines Läsionsmodells ohne Kanal für das Polypektomietraining - wenigstens ein (schneidbarer) Teil der Läsion aus einem elektrochirurgisch (HF-Chirurgie) schneidbaren Material, wie beispielsweise schneidbare Kunststoffe, insbesondere Silikon, welchem ein elektrisch leitfähiger Stoff beigemengt sein kann. Der Kanal - sofern vorhanden- ist vorzugsweise endständig verschlossen, so dass erst nach einem Schneiden eine Öffnung entsteht und eine Blutung simuliert wird.

In besonders bevorzugter Ausgestaltung der Erfindung besteht dieser Teil bzw. diese Komponente des Läsionsmodells aus tierischem Material, insbesondere wenigstens einem Stück eines Tieres mit einem Längskanal (wie Darm o.ä.), wie beispielsweise eines Wurms, einer Raupe, einer Schnecke, etc. tierisches Material schließt hierbei und im Folgenden im Sinne der Erfindung auch in der Lebensmittelindustrie (einschließlich Metzgereien) verwendetes, zum Verzehr geeignetes, eventuell weiterverarbeitetes (über Entnahme, Entleerung und Reinigung der Organe hinausgehende Maßnahmen), organisches Material, wie beispielsweise Wursthaut etc., ein. Ein derart gebildeter Polypenstiel weist naturgemäß bereits einen vorzugsweise innenliegenden Kanal (durchgespülter Wurmabschnitt) auf, welcher, wie vorstehend erläutert, der Simulation einer Blutung dienen kann und andererseits einem realen Polypenstiel aufgrund der Eigenschaften des tierischen Materials (sehr weich bzw. weicher als künstliche Materialien, elektrochirurgisch schneidbar inkl. Koagulieren, etc.) sehr nahe kommt. Der derart (teilweise oder in Gänze) ausgebildete Polypenstiel kann beispielsweise mittels Kleb- oder Steckverbindung (oder auch mit Faden verbunden) mit dem aus einer oder mehreren Komponenten bestehenden Rest des Polypenmodells verbunden sein/werden, wobei diese Verbindung nach einer Verwendung (Trainingseinsatz mit einem Durchschneiden des Stiels) wieder gelöst werden kann, um einen neuen Stiel in den bestehenden und damit wiederverwendbaren Rest einzusetzen.

Der Kopfbereich und eventuell auch ein anschließender Bereich des Stiels, insbesondere Stielansatz oder Stutzen zum Aufsetzen des Stiels, ist hierbei aufwändig, beispielsweise aus Kunststoff oder Gummi, hergestellt. Der aufwändig gestaltete Kopf ist in bevorzugter Ausgestaltung der Erfindung auf den Stiel nur aufgesteckt, so dass er nach einer Übung von einem (durchschnittenen) Stielrest abgezogen werden kann und auf einen neuen Stiel aufgesetzt und wieder in das Trainingsmodell eingesetzt werden kann. Selbstverständlich ist es aber auch denkbar, den (wiederverwendbaren) Kopf oder Kopfbereich mit dem Stiel auf andere Art, beispielsweise mittels Kleben oder Faden (genäht), zu verbinden, wobei die Verbindungsstelle nur so stark ausgebildet ist, dass ein Trennen ohne Zerstörung des Kopfes möglich ist.

In besonders vorteilhafter Ausgestaltung der Erfindung kann der Kopf hierzu eine Art Düse (kleine Öffnung) aufweisen, welche am äußeren Umfang sitzt und mit der inneren Ausnehmung/Kanal/Stutzen zur Aufnahme des Stielendes (in Form eines Kanals) in Verbindung steht. Um einen (geschnittenen) Stielrest vom Kopf zu trennen, kann dann vorteilhafterweise von außen kurzzeitig ein Medium (Gas, Luft oder Flüssigkeit) mit erhöhtem Druck (beispielweise ein Ende eines mit Druckluft versorgten Schlauches) an die Düse angesetzt werden, um den Stielrest durch Abblasen zu entfernen. Zudem ist es denkbar, den Stielrest mittels eines in die kleine Öffnung eingesetzten Stiftes auszuschieben.

Auch bei dieser Ausführungsform ist zumindest ein Teil des Läsionsmodells für einen erneuten Einsatz wiederverwendbar. Nach einem durchgeführten Training kann der Anfangszustand des Trainingsmodells mit entsprechend erforderlichem Läsionsmodell bzw. -modellen auf einfache und kostengünstige Weise unter Verwendung wenigstens des aufwändig gestalteten Kopfes wiederhergestellt werden. Diese Ausführungsform kann selbstverständlich auch statt mit einem, vorzugsweise im Stielbereich angeordneten, insbesondere innenliegenden, Kanal auch ohne einen derartigen Kanal ausgebildet sein, so dass neben einem tatsächlichen Schneiden (HF-Chirurgie) nicht zwingend auch eine Blutung infolge des Schnitts (und möglicherweise nicht ausreichende Koagulation) dargestellt wird.

In einer anderen Ausgestaltung der Erfindung weist das Läsionsmodell eine magnetische Halterung (Halterung durch Magnetkraft) auf, um am Inneren des Bereiches magnetisch gehaltert zu werden. Hierzu kann entweder am oder im Läsionsmodell, insbesondere nahe der vorgesehenen Stelle der Halterung, ein Magnet oder ein magnetisches Material angeordnet sein, um mit einem in dem Bereich oder außen, insbesondere nahe der vorgesehenen Stelle der Halterung, angeordneten magnetischen Material oder Magneten (Permanent- oder Elektromagnet) zusammenzuwirken. Selbstverständlich ist es auch denkbar, die magnetische Halterung statt durch Zusammenwirkung eines Magneten mit einem magnetischen Material auch durch zwei entsprechend gepolte Magnete, insbesondere Permanentmagnete, auszubilden.

Insbesondere im Falle eines Läsionsmodells eines gestielten Polypen ist es aber auch möglich, die vorgenannte magnetischen Halterung bzw. Verbindung innerhalb des Läsionsmodells selbst auszubilden. In diesem Fall weist das Läsionsmodell (wenigstens) zwei Komponenten auf, welche an oder im Bereich der Verbindungsstelle einen Magneten/magnetisches Material oder zwei Magnete besitzen, die diese beiden Komponenten des Läsionsmodells zusammenhält. Als Verbindungsstelle bietet sich in bevorzugter Ausgestaltung eine Stelle des Stiels an, an welcher ein Schnitt für eine Polypektomie erfolgen sollte.

Ein derartiges mittels eines Magnetsystems im Bereich (des Hohlorgans) gehaltertes Läsionsmodell ist vorteilhafterweise komplett wiederverwendbar, so dass kein Teil ersetzt werden muss. Durch die magnetische Halterung ist nach einem einmaligen Herstellen eines Anfangszustandes keine Neuinstallation nach einem durchgeführten Training notwendig. Die Polypektomieschlinge trennt beim Training die Magnetverbindung derart kurzzeitig und vor allem ohne wesentliche Erhöhung eines Abstandes, dass das Läsionsmodell nach dem Durchziehen der Schlinge und damit der Simulation der Polypektomie wieder am vorgesehenen Ort festsitzt. Durch das Freiwerden der Schlinge, welche ja vorher über den Kopf gelegt werden und an der vorgesehenen Schneidstelle am Stiel platziert werden muss, ist eine erfolgreiche Platzierung sowie ein erfolgreiches Schneiden auf realitätsnahe Weise simuliert.

Selbst die Erstinstallation oder eine für eine Umgestaltung des Trainingsmodells notwendige Neuinstallation - also Einsetzen von einem oder mehreren, vorzugsweise unterschiedlich ausgebildeten Läsionsmodellen - ist in dieser Ausführungsform infolge der Magnetverbindung bzw. des Magnetsystems besonders einfach auszuführen. Das Entfernen von Läsionsmodellen (Ektomie) mittels entsprechendem Werkzeug, insbesondere Zange, und Einsetzen eines Läsionsmodells kann sogar in Form einer Übung erfolgen, wodurch die Effektivität des Trainingsmodells weiter erhöht wird.

Selbstverständlich ist auch diese Ausführungsform nicht auf zwei Komponenten aus demselben oder unterschiedlichem Material beschränkt, sondern kann auch aus mehr als zwei Komponenten bestehen. In jedem Fall ist jedoch wenigstens eine (insbesondere eine aufwändig gestaltete) Komponente des Läsionsmodells, vorzugsweise dessen Auswuchs (Erweiterungen), bzw. dessen Kopf, für einen weiteren Trainingseinsatz wiederverwendbar ausgebildet, so das hierdurch die Kosten für den mehrmaligen Einsatz des Läsionsmodells in einem Trainingsmodell vermindert werden können.

Soll an dem (in ein Trainingsmodell eingesetzten) Läsionsmodell eine Polypektomie trainiert werden, kann - unabhängig von dem Vorhandensein eines, vorzugsweise innenliegenden, Kanals - das Läsionsmodell zumindest in einem elektrochirurgisch schneidbaren Teilbereich oder im Bereich einer vorstehen erläuterten Verbindungsstelle einen wärmeindizierenden Stoff aufweisen. Hierdurch kann selbst bei Verwendung eines künstlichen oder tierischen Materials ein Koagulieren in Abhängigkeit von Stromstärke und Frequenz durch entsprechende Veränderung (Farbe, Transparenz) des Stoffes angezeigt und damit simuliert und für einen Endoskopiker während eines Trainings durch die Optik eines Endoskops wahrgenommen werden.

In weiterer Ausgestaltung der Erfindung weist das Trainingsmodell eine Hülle (insbesondere in Form einer Dose) auf, welche den Bereich (aus künstlichem oder tierischem Material) flüssigkeitsdicht oder sogar luft- bzw. gasdicht umschließt. Auf diese Weise können Verschmutzungen des Übungsraums, beispielsweise aufgrund einer sonst möglicherweise austretenden Flüssigkeit (während eines Trainings mit einer Blutungs-Läsion) sicher vermieden werden. Im Falle eines gasdichten Abschlusses ist es zudem möglich, den im Inneren der Hülle befindlichen Bereich einem vom Umgebungsdruck abweichenden Druck auszusetzen, so dass beispielsweise eine Verringerung des Drucks ein Ausweiten/Aufblähen und eine Erhöhung des Drucks eine Verkleinerung (Volumen) des Bereiches zur Folge hat. Hierdurch können auf einfache Art und Weise weitere Gegebenheiten (Verengungen, Engstellen, Erweiterungen, Aufblähen während der Untersuchung, etc.) im Inneren eines Abschnittes eines Gastrointestinaltraktes simuliert werden.

Weitere vorteilhafte Ausgestaltungen der Erfindung sind in den abhängigen Ansprüchen angegeben.

Wesentlich in den unterschiedlichen Ausgestaltungen der Läsionsmodelle und/oder deren Halterung oder Anordnung (flache, sessile oder gestielte Läsionsmodelle, insbesondere Polypen mit unterschiedlichem Aufbau, nämlich Magnetsystem/-halterung, vorzugsweise innenliegendem Kanal bzw. Blutungs-Läsion, elektrochirurgisch schneidbarerem Teil-Bereich/-Komponente) ist die Wiederverwendbarkeit wenigstens einer Teilkomponente eines Läsionsmodells, wobei eine Verbindung zu dieser Komponente zerstörungsfrei (d.h. ohne Zerstörung der wiederverwendbaren Komponente) gelöst werden kann.

Zudem sind die unterschiedlichen Ausgestaltungen der Erfindung unabhängig voneinander, wobei die Wiederverwendbarkeit in unterschiedlicher Weise gelöst ist. Dennoch sind die verschiedenen Ausgestaltungen wie folgt miteinander kombinierbar:
Läsionsmodelle mit Magnethalterung können zudem als Blutungs-Läsion ausgebildet sein. Hierzu kann der - vorzugsweise innenliegende - Kanal an der magnetischen Halterungs-/Verbindungsstelle ein Abdichtung, beispielsweise eine O-Ringdichtung, aufweisen.

Läsionsmodelle mit einem, vorzugsweise innenliegenden, Kanal, welcher mit Flüssigkeit versorgt wird, können zudem mit einer Einrichtung versehen werden, welche den Flüssigkeitsdruck und/oder Flüssigkeitsstand detektiert und in Abhängigkeit hiervon eine optische und/oder akustische und/oder olfaktorische Anzeige auslösen bzw. steuern kann.

Elektrochirurgisch schneidbare Läsionsmodelle können mit oder ohne Kanal ausgebildet sein.

Die Erfindung wird nachfolgend anhand in der Zeichnung dargestellter Ausführungsbeispiele näher erläutert.

In der Zeichnung zeigen:
- Fig. 1: einen Teil eines Trainingsmodells nach der Erfindung;
- Fig. 2: eine Detailansicht auf einen Teil eines Trainingsmodells nach Fig. 1 mit einem darin befestigten Organstück;
- Fig. 3: eine teilgebrochene Detailansicht eines Teils eines Trainingsmodells nach Fig. 2 mit umschließendem Gehäuse;
- Fig. 4: eine Schnittansicht eines Ausschnitts einer Organwand mit einer ersten Ausführungsform eines Läsionsmodells mit einer magnetischen Halterung entlang der Linie A-A' in Fig. 5;
- Fig. 5: eine perspektivische Außenansicht der magnetischen Halterung nach Fig. 4;
- Fig. 6: eine perspektivische (lumenseitig sichtbare) Draufsicht auf eine zweite Ausführungsform eines Läsionsmodells mit einer/für eine magnetischen Halterung;
- Fig. 7: eine perspektivische (zur Organwand gerichtete) Unteransicht der zweiten Ausführungsform eines Läsionsmodells nach Fig. 6;
- Fig. 8: eine dritte Ausführungsform eines Läsionsmodells in Form eines gestielten Polypen mit magnetischer Halterung;
- Fig. 9: eine vierte Ausführungsform eines Kopfbereiches eines Läsionsmodells in Form eines gestielten Polypen mit einem vorzugsweise innenliegenden Kanal (Blutungs-Läsion);
- Fig. 10: eine fünfte Ausführungsform eines Läsionsmodells in Form eines gestielten Polypen mit einem vorzugsweise innenliegenden, rechtwinklig abgewinkelten Kanal (Blutungs-Läsion);
- Fig. 11: eine Draufsicht auf das Läsionsmodell nach Fig. 10;
- Fig. 12: eine sechste Ausführungsform eines Läsionsmodells in Form eines gestielten Polypen mit einem bürstenartigen Kopf;
- Fig. 13: eine siebte Ausführungsform eines Läsionsmodells in Form eines gestielten Polypen mit einem elektrochirurgisch trennbaren Stiel;
- Fig. 14: eine teilgeschnittene Ansicht eines Ausschnitts einer Organwand mit einer Versorgung eines vorzugsweise innenliegenden Kanals eines (Blutungs-)Läsionsmodells (mit geschnittener Organwand und Halterung);
- Fig. 15: eine Draufsicht auf den Ausschnitt nach Fig. 14;
- Fig. 16a: eine Schnittansicht eines Ausschnitts einer Organwand mit einer siebten Ausführungsform eines Läsionsmodells in Form eines sessilen Polypen in einer optionalen ersten Stufe Unterspritzen) des Abtragevorgangs;
- Fig. 16b: eine Ansicht des Ausschnitts nach Fig. 16a in einer zweiten Stufe (des Abtragevorgangs) und
- Fig. 16c: eine Ansicht des Ausschnitts nach Fig. 16a in einer dritten Stufe des Abtragevorgangs.

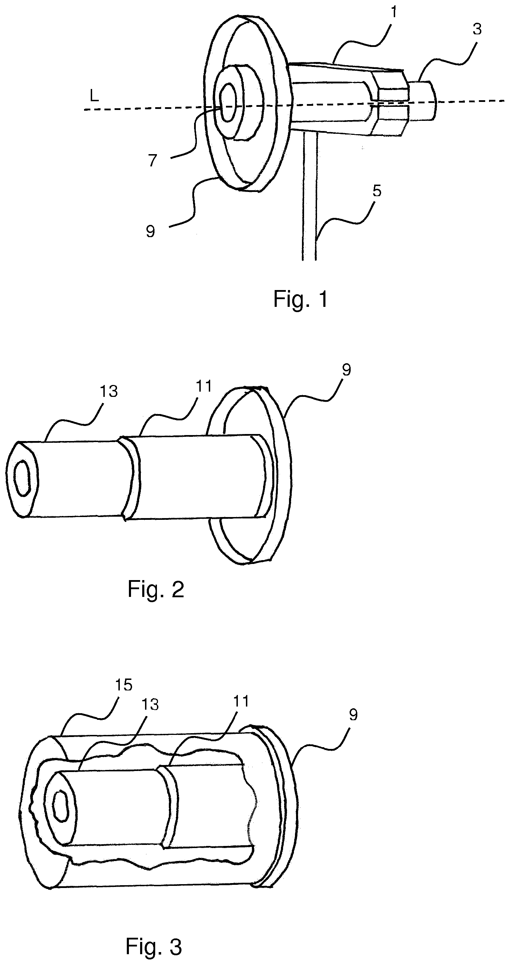

Das in Fig. 1 bis Fig. 3 dargestellte Trainingsmodell weist ein Gehäuse auf, welches aus einer, vorzugsweise zylindrischen, Dose 15 und einem beispielsweise als Schraubdeckel ausgebildeten Deckel 9 besteht. Die Verbindung zwischen Deckel 9 und Dose 15 erfolgt (beispielsweise mittels eines Dichtungsrings zwischen Deckel 9 und Dose 15) vorzugsweise flüssigkeits- oder gar gasdicht, so dass im geschlossenen Zustand keinerlei Flüssigkeit austreten und/oder Gas austreten oder eindringen kann. Hierdurch kann beispielsweise vermieden werden, dass eine Blut simulierende Flüssigkeit, die beim Training aus Blutungs-Läsionen quillt oder spritzt, aus dem Simulator austritt und auf den Boden tropft. Zudem kann eine - nachstehend beschriebene - Neigung des Simulators - Dosenboden nach unten - bei kleineren Flüssigkeitsmengen einen Austritt aus dem Simulator auch dann verhindern, wenn der Deckel 9 nicht abgedichtet ist. Zusätzlich kann ein Absaugschlauch in den Simulator eingesetzt werden, der vorn mit einem Gewicht, beispielsweise in Form einer Kugel mit Bohrung für den Schlauch, versehen ist, damit er stets auf dem tiefsten Punkt des Simulators positioniert ist. Wenn mehrere elektrisch leitfähige (elektrochirurgisch schneidbare) Läsionsmodelle, beispielsweise für ein Polypektomie-Training mit HF-Strom, in den Simulator eingesetzt sind, können sie während des Trainings zu trocken werden und ihre elektrische Leitfähigkeit reduzieren oder verlieren, bis alle Trainees nacheinander ihr Training absolviert haben. Um dies zu vermeiden, kann Feuchtigkeit ins Innere des Simulators zugeführt werden. Dies kann beispielsweise durch ein wassergetränktes, saugfähiges Material wie einen Schwamm, Zellulosematerial o.ä. erfolgen, das innen im Simulator positioniert ist.

In eine Öffnung des Deckels 9 ist vorzugsweise senkrecht ein Intubationstubus 3, beispielsweise in Form eines runden Rohres und vorzugsweise mittig oder konzentrisch, eingesetzt. Selbstverständlich ist es aber auch denkbar, dass das Gehäuse auch mehrere Öffnungen aufweist, die als Zugang für ein Endoskop dienen.

Das Gehäuse wird über den Intubationstubus 3 in einem (waagrechten) Arm 1 gehalten, welche mit einem senkrechten Ständer 5 verbunden ist. Auf diese Weise kann das Gehäuse an einem Tisch, Endoskopiewagen (Turm, Trolley), einer Geräteampel etc. angeordnet oder befestigt werden. Durch eine in der Zeichnung nicht näher dargestellte gelenkige Verbindung mit der Halterung oder innerhalb der Halterung 1 und dem Ständer 5 kann das Gehäuse in verschiedene Positionen gebracht und durch eine entsprechende Fixierung festgestellt werden. Ein Gelenk für die horizontale Rotation des Gehäuses in dessen Längsachse L wird durch den Intubationstubus 3 und die für ihn in der Halterung 1 befindliche Ausnehmung, beispielweise in Form einer Bohrung, gebildet. Ein zweites Gelenk für die vertikale Rotation des Gehäuses kann durch ein entsprechendes Gelenk im Arm 1 oder zwischen dem Arm 1 und dem Ständer 5 der Halterung gebildet werden, so dass das Gehäuse von seiner dargestellten waagrechten Position in ein senkrechte Position (Dose 15 nach unten gerichtet) verschwenkt werden kann. Die Rotation des Gehäuses mit einem darin angeordneten Organ(-modell) verändert die Position der im Organ angeordneten Läsionen bzw. Läsionsmodelle, so dass für den Endoskopiker verschiedene Lagerungspositionen des Patienten und damit Situationen bei der Endoskopie simuliert werden können.

Die für das jeweilige Training erforderlichen Organe bzw. Hohlorgane (aus künstlichem oder tierischem Material) oder Teile davon werden so in das Gehäuse eingesetzt, dass sie mit dem Endoskop erreichbar sind. Dazu ist innen im Gehäuse, vorzugsweise am Deckel 9, ein Stutzen 7 angeordnet, auf den eine Organhalterung 11 aufgeschoben und befestigt werden kann (beispielsweise mit einem O-Ring zwischen Stutzen 7 und Organhalterung 11 oder einer Befestigungsschraube). In die Organhalterung 11 kann ein Organstück 13, beispielsweise ein nachgebildeter Kolonabschnitt, eingesetzt werden. Bei sehr weichen Organteilen, vor allem bei tierischen Organteilen - wie zum Beispiel Darmabschnitten - besteht das Risiko, dass das Lumen kollabiert. In einem solchen Fall kann das Lumen, wenn das Organteil wie beschrieben eingesetzt ist, durch Luftinsufflation wiederhergestellt werden.

Es ist jedoch auch denkbar, das Organteil außen auf eine mit großen Aussparungen versehene Organhalterung 11 aufzuschieben. Im Bereich der Aussparungen sind die Organteile dann endoskopisch zugänglich. Weiterhin ist es denkbar, das Kollabieren des Lumens zu verhindern, indem Organteile 13 in einen Behälter oder ein Rohr eingesteckt werden, das gegen das Organteil abgedichtet wird. Dann kann durch Ausübung eines Soges (Unterdrucks) zwischen Organteil 13 und Rohr das Lumen des Organteils 13 entfaltet werden. Ein Vorteil eines derartigen Behälters besteht zudem darin, dass er in verschiedener Weise geformt sein kann, wodurch anatomische Verhältnisse bei Mensch und Tier, beispielsweise kurvige oder geknickte Verläufe, simuliert werden können. Der besondere Vorteil der vertikalen Ausrichtung des Trainingsmodells bzw. der Dose 15 nach unten besteht darin, dass sich ein im Gehäuse zu Übungszwecken angebrachtes tierisches Organ 13, beispielsweise ein Darmstück, aushängen kann und so spontan sein Lumen entfaltet.

Es ist jedoch auch denkbar, dass das Organteil 13 am Ende im Simulator verschlossen wird, während das andere Ende gegenüber der Organhalterung 11 abgedichtet ist. Wird die Organhalterung 11 ihrerseits gegenüber dem Stutzen 7, beispielsweise durch einen O-Ring, der Intubationstubus 3 gegen den Stutzen 7 und gleichzeitig gegen das eingeführte Endoskop abgedichtet, beispielsweise durch einen auf den Intubationstubus 3 endständig aufgesetzten Dichtungsring, reagiert das Organteil 13 gleichermaßen durch Luftinsufflation via Endoskop oder durch eine Pumpe. Der durch die Entfaltung aufgebaute Überdruck kann durch ein Loch, beispielsweise zentral im Boden der Dose 15, entweichen.

Um etwaige Flüssigkeit, die bei endoskopischen Aktionen in das Gehäuse instilliert wird, wieder zu entfernen, kann das Gehäuse zudem mit einer in der Zeichnung nicht näher dargestellten Absaugvorrichtung versehen sein. Weiterhin kann in den Intubationstubus 3 eine Rückholfeder eingesetzt sein, um die Flexibilität und den federnden Widerstand in Längsrichtung L beim tatsächlichen Eindringen in einen Abschnitt des Gastrointenstinaltraktes simulieren zu können. Hierzu kann beispielsweise eine Art in axialer Richtung L (konzentrisch) eingebrachter Dichtungsring durch eine Feder mit Federkraft beaufschlagt sein, der an dem Endoskopschaft anliegt (Reibung). Bei der Vorschubbewegung des Endokops wird diese zwar insgesamt zugelassen, aber gleichzeitig dabei die Feder gespannt (Federkraft entgegen der Vorschubrichtung). Wird das Endoskop losgelassen, nimmt der Dichtungsring bei Ausdehnung der Feder das Endoskop entgegen der Vorschubbewegung mit.

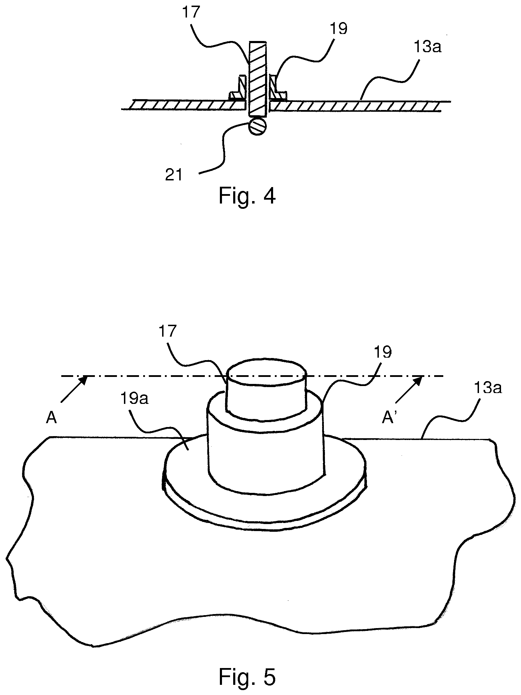

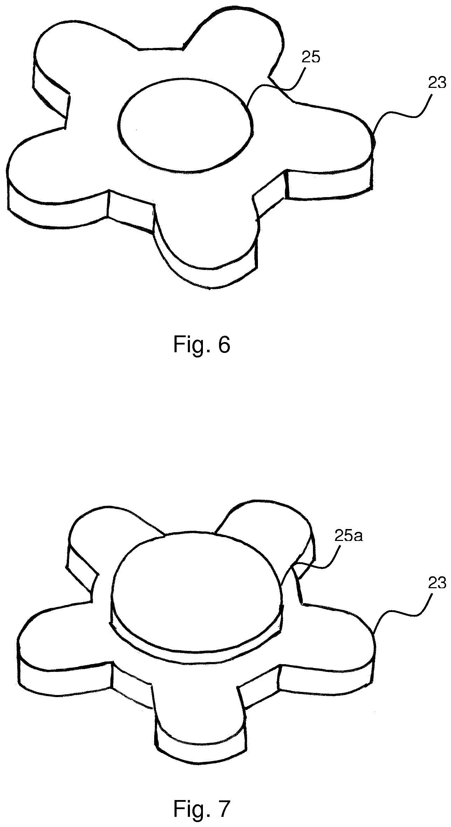

Wie aus Fig. 4 und Fig. 5 ersichtlich, kann in eine Organwand 13a des Organstücks 13 zur Halterung eines Läsionsmodells ein Magnet 17 eingesetzt sein. Der Magnet 17 durchdringt hierbei vorzugsweise durch eine entsprechende Öffnung die Organwand 13a, obwohl auch eine Anordnung ohne Durchdringen (und Wirken der magnetischen Anziehungskraft durch die Organwand 13a hindurch) denkbar wäre. Der Magnet 17 wird mittels einer flanschartigen Halterung 19 außen an der Organwand 13a (beispielsweise durch Kleben, Nähen, etc.) befestigt oder beispielsweise bei der Herstellung der Organwand eingegossen. Lumenseitig kann dann ein Läsionsmodell, beispielsweise eine Kugel 21 oder ein Modell eines sessilen Polypen 23, wie in Fig. 6 und Fig. 7 dargestellt, magnetisch gehaltert werden. Läsionsmodelle wie die Kugel 21 (erste Ausführungsform) und der flache/sessile Polyp 23 (zweite Ausführungsform) bestehen hierzu zur Gänze oder zumindest zu einem Teil aus einem magnetisierbaren Material (insbesondere ferromagnetisch) oder einem Magneten, wobei auch entsprechende Einlagerungen möglich sind. Beispielsweise zeigen Fig. 6 und Fig. 7 einen flachen/sessilen Polypen 23 (aus Kunststoff, Gummi o.ä. gut formbarem und formstabilem Material), in welchen selbst ein Magnet 25 eingeklebt oder eingegossen ist.

An seiner Unterseite (der lumenseitig der Wand 13a zugewandten Seite) weist der sessile Polyp 23 einen Abstandhalter 25a in Form einer (flach abgeschlossenen) Erhebung auf, durch welche die äußeren Teile der polypoiden Läsion in Form eines sessilen Polypen 23 Abstand von der Organwand 13a bekommen. Dieser Abstandhalter kann beispielsweise durch ein Herausragen des Magneten 25 bedingt sein oder als ein mit dem Polypen verbundener Fortsatz ausgebildet sein, der vorzugsweise einen Magneten oder das magnetisierbare Material aufnehmen kann. Dadurch lässt sich eine Polypektomieschlinge, die zur Polypenabtragung im Niveau der Schleimhaut durch die Polypenbasis gezogen werden muss, besser zirkulär am Polypen 23 anlegen.

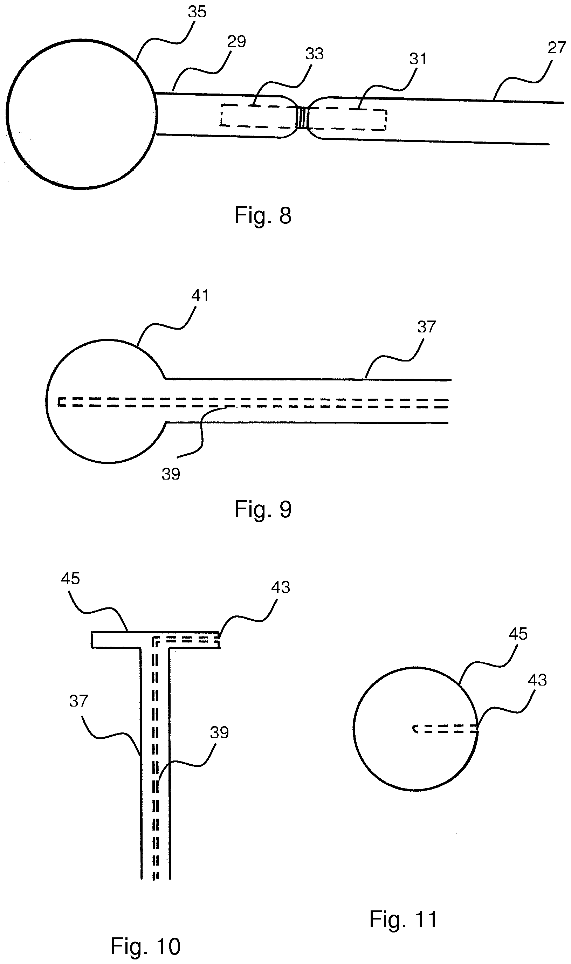

Wie in Fig. 8 dargestellt, kann statt einer magnetischen Halterung direkt an der Organwand 13a im Falle eines gestielten Polypen dessen unterer Stielteil 27 in nicht näher dargestellter Weise direkt mit der Organwand 13a verbunden (geklebt, genäht, etc.) sein. Vorzugsweise kann der Stiel durch ein Loch in der Organwand gesteckt werden, dessen Durchmesser etwas geringer ist als der des Stiels, so dass der Stiel elastisch gehalten wird. Die auch in diesem Fall realisierte magnetische Halterung bzw. Verbindung ist nunmehr im Stiel, vorzugsweise in dessen mittlerem Bereich, selbst ausgebildet. Hierzu weist der Stielteil 27 an dessen (der Organwand entgegengesetztem) Ende einen (eingegossenen, eingeklebten oder in eine vorgesehene, eingegossene Aufnahme eingesteckten) Magneten 31 auf, welcher mit einem entsprechend im gegenüberliegenden Stielteil 29 angeordneten Magneten 33 zusammenwirkt, um den Stielteil 29 mit einem daran befindlichen, beispielsweise kugelförmig ausgebildeten, Kopf 35 zu haltern. Selbstverständlich ist es aber auch denkbar, den unteren Stielteil 27 an der Organwand 13a ebenfalls magnetisch zu haltern.

Um eine möglichst stabile, richtungsgetreue Halterung entlang der Stiellängsachse zu gewährleisten, können die anliegenden Endbereiche der Magneten 31 und 33 oder die anliegenden Endbereiche der Stiele 27 und 29 eben ausgebildet sein, so dass eine (form-)stabile Flächenberührung besteht.

Selbstverständlich können vorstehend erläuterte magnetische Halterungen der Anordnung beliebig ausgebildeter Läsionsmodelle, insbesondere gestielter, flacher oder sessiler Polypen, dienen.

Mit der vorstehend erläuterten magnetischen Halterung bzw. dem Magnetsystem kann für einen Trainee eine Abtragung einer Läsion ohne ihre Zerstörung simuliert werden. Hierdurch kann eine in der realen Endoskopie häufig notwendige Abtragung von Läsionen zum Zweck der Diagnostik oder Therapie trainiert werden. Beispiele sind die Biopsie, d.h. die Entnahme von Gewebe aus einer auffälligen Läsion zu diagnostischen Zwecken, oder die therapeutische Abtragung einer polypoiden Läsion mit einer Biopsiezange.

Selbstverständlich kann die erläuterte magnetische Halterung statt mit zwei entsprechend ausgerichteten Magneten auch mit einem Magneten und einem magnetisierbaren Material realisiert sein, wobei der Einsatzort der Komponenten - Magnet und magnetisierbares Material - selbstverständlich vertauscht werden. Die vorgenannten Komponenten können in fester, feinkörniger/pulverartiger oder flüssiger Form (zum Beispiels in das Material eingearbeitet) verwendet werden.

Im Folgenden wird erläutert, wie eine Biopsie anhand der vorstehend erläuterten ersten Ausführungsform (Kugel 21) mit magnetischer Halterung 17, 21 simuliert und trainiert werden kann.

In der realen Biopsie werden auffällige Läsionen im Bereich des Gastrointenstinaltraktes, die sich durch Farbe, Struktur oder Form von der umgebenden Schleimhaut abheben, biopsiert. Hierzu muss die auffällige Läsion mit dem Endoskop eingestellt werden, was je nach Lage der Läsion unterschiedlich schwer sein kann. Dann wird die Biopsiezange aus dem Instrumentierkanal des Endoskops ausgefahren, und aus der Läsion wird eine Gewebeprobe entnomment, d.h. mit der Zange herausgezwickt.

Bei der Simulation besteht die zu biopsierende Läsion aus einer Komponente des Magnetsystems, zum Beispiel in Form eines Kügelchens 21 oder in Form eines Partikels (wenigstens zum Teil bestehend aus einem magnetisierbaren oder magnetischen Material), die so dimensioniert sind (beispielsweise 1,5 - 3mm), dass sie mit einer Biopsiezange gefasst werden können. Bei einer bevorzugten Variante des Biopsie-Magnetsystems ist ein kleiner zylindrischer Magnet 17, mit beispielsweise 2mm Durchmesser und 10mm Länge, an der Organwand - wie vorstehend erläutert - mittels einer Halterung so angebracht, dass ein Ende im Lumen des Organs sichtbar ist oder knapp übersteht (beispielsweise 1-2mm). Selbstverständlich ist es auch denkbar, den Magneten 17 unsichtbar außen auf der Organwand anzuordnen, wenn innen an der Organwand eine Markierung der Position (beispielsweise ein winziges Loch, durch das der externe Magnet 17 nicht sichtbar ist) angebracht ist. Die Magnete 17 können farbig markiert sein, damit - bei Vorhandensein mehrerer Läsionen in verschiedenen Positionen des Organs - der Tutor dem Trainee bestimmte Läsionen zur Biopsie zuweisen kann. Die zu biopsierende Läsion ist in der bevorzugten Variante als Metallkügelchen 21 mit beispielsweise 2-3mm Durchmesser ausgebildet.

Beim Biopsie-Training kommt es, wie bei der realen Biopsie, darauf an, die zu biopsierende Stelle genau mit dem Endoskop einzustellen, sie mit der aus dem Endoskop ausgefahrenen Biopsiezange zu greifen und durch Schließen der Zange eine Probe daraus zu entnehmen, also zu biopsieren. Die Probenentnahme selbst ist bei dem Magnetsystem, ebenso wie in der Realität, auf einfache Weise möglich. Die entnommene Probe kann an einer anderen, mit dem Magnetsystem ausgestatteten Stelle, insbesondere einem mittels Halterung 19 in die Organwand 13a eingesetzten Magneten 17, gezielt wieder angesetzt werden. Eine Instandsetzung der Probeentnahmestelle ist vorteilhafterweise nicht erforderlich.

Bei einer realen Polypektomie bei flachen oder sessilen Polypen wird die Schlinge möglichst exakt an der Basis des Polypen, also dort, wo das krankhafte Polypengewebe auf der inneren Oberfläche des GIT aufsitzt, angesetzt. Dann wird unter Anwendung von Hochfrequenz-Strom die Polypenschlinge langsam zugezogen, so dass der Polyp abgetrennt wird, ohne dass es, im Idealfall, zu einer Blutung kommt.

Beim Training einer Polypektomie einer flachen oder sessilen polypoiden Läsion mit dem vorstehend erläuterten Magnetsystem wird der Polyp 23 mit der in den Arbeitskanal eines entsprechend platzierten Endoskops eingeführten Schlinge gefasst. Die dazu erforderliche Technik - Einstellen des Endoskops auf den Polypen 23, Fassen des Gesamt-Polypen mit der Schlinge an der korrekten Stelle - (dies gilt selbstverständlich für alle vorgenannten und nachstehend erläuterten speziellen Polypenformen) ist weitgehend identisch mit dem Vorgehen bei der realen Polypektomie. Dann erfolgt der Schlingendurchzug durch die Polypenbasis (magnetische Verbindungsstelle Wand 13a zu Unterseite des Polypen 23), welcher, im Gegensatz zur Realität, ohne Strom durchgeführt wird. Der "abgetrennte" Polyp 23 kann ohne weitere Maßnahmen sofort wieder für die nächste Polypektomie verwendet werden. Die korrekt durchgezogene und damit wieder freiwerdende Schlinge ist der Beleg für die erfolgreiche Polypektomie, wobei die magnetische Verbindung sofort wieder besteht. Bei einem inkorrekten Anlegen, bei dem die Schlinge initial nicht in allen Bereichen unter die flache polypoide Läsion gelegt werden kann (beispielsweise kann sich die Schlinge mit den vorstehenden Fortsätzen der sternförmigen polypoiden Läsion verhaken), ist ein Schlingendurchzug nicht möglich, so dass die Schlinge nicht freikommt. Bei flachen und sessilen, ungestielten polypoiden Läsionen können (wie auch an gestielten Polypenköpfen) daher zur Erhöhung der (zu erlernenden) Fertigkeiten bürstenartige oder sternförmige Auswüchse vorzugsweise an der Zirkumferenz der Läsionsmodelle angebracht werden.

In vivo auftretende gestielte polypoide Läsionen (gestielte Polypen) bestehen dagegen aus einem Polypenkopf (mit dem krankhaften Gewebe) und dem Stiel, mit dem der Polyp an der Wand fixiert ist. Vor der Abtragung einer jeglichen Läsion muss die Schlinge so um die Läsion gelegt werden, dass diese möglichst in einem Stück abgetragen werden kann. Bei gestielten Polypen muss die offene Polypektomieschlinge aber zunächst über den Kopf des Polypen in den Stielbereich gebracht werden, was je nach Kopfform sehr schwierig sein kann. Dies kann insbesondere sehr schwierig sein, wenn der Kopf sehr groß und/oder stark gelappt ist, oder wenn er hinter einer Krümmung liegt und mit dem Endoskop nicht gut eingestellt werden kann. Langwierige Versuche, die Schlinge über den Kopf zu bewegen, führen häufig zu Sickerblutungen, die, obwohl per se ungefährlich, den Fortgang der Polypektomie durch Sichtbehinderung erschweren. Ein wichtiges Ziel in der Ausbildung des Endoskopikers muss es daher sein, den Kopf eines Polypen mit der Schlinge schnell und atraumatisch zu überwinden. Danach muss die Schlinge möglichst optimal, in der Regel in der Mitte zwischen Polypenkopf und GIT-Wand angesetzt (der Stiel, möglichst im mittleren Bereich, ist die ideale Stelle für die Gewebedurchtrennung bei der Polypektomie) und vorsichtig geschlossen werden, bis sie an dem Stiel anliegt, ohne ihn zu durchtrennen. Dann wird der Polyp mit HF-Strom unter Zuziehen der Schlinge abgetrennt, im Idealfall ohne eine Blutung aus dem Stiel hervorzurufen. Zur realitätsnahen Simulation einer Polypektomie eines gestielten Polypen kann das Magnetsystem an jeder beliebigen Stelle des Stiels 29, wie in Fig. 8 dargestellt, bevorzugt in der Stielmitte, aber auch am Übergang zwischen Stiel 29 und Kopf 35 oder zwischen Stiel 27 und Wand 13a des GIT angebracht sein.

Beim Training einer Polypektomie einer gestielten polypoiden Läsion mit dem vorstehend erläuterten Magnetsystem (Fig. 8) wird eine in den Arbeitskanal eines entsprechend platzierten Endoskops eingeführte Schlinge zuerst über den Kopf 35, 49 des Polypen gelegt. Je nach Form des Polypenkopfes 35, 49 gestaltet sich dieses Überden-Kopf-Legen mit unterschiedlichem Schwierigkeitsgrad (beispielsweise kann sich die Schlinge in hervorragenden Fortsätzen, wie beispielsweise Falten, Lappen oder Noppen 47 der halbkugel- oder kugelförmig ausgebildeten Köpfe verhaken). Die dazu erforderliche Technik - Einstellen des Endoskops auf den Polypen, Über-den-Kopf-Legen der Schlinge, Fassen des vorzugsweise mittleren Stielbereichs mit der Schlinge - (dies gilt selbstverständlich für alle vorgenannten und nachstehend erläuterten speziellen Polypenkopfformen) ist weitgehend identisch mit dem Vorgehen bei der vorstehend erläuterten realen Polypektomie.

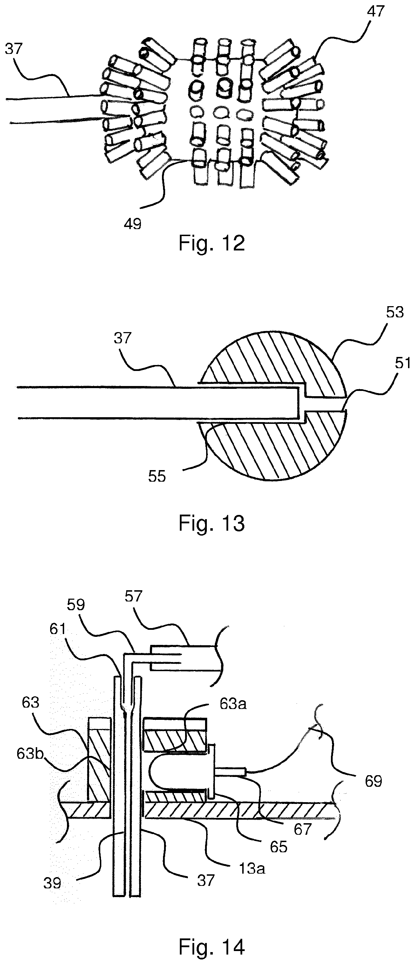

Dann erfolgt der Schlingendurchzug durch den Stiel (magnetische Verbindungsstelle Stiel 29 zu Stiel 27), welcher, im Gegensatz zur Realität, auch hier ohne Strom durchgeführt wird. Der "abgetrennte" Polyp 35 mit Stielansatz 29 kann ohne weitere Maßnahmen sofort wieder für die nächste Polypektomie verwendet werden. Die korrekt durchgezogene und damit wieder frei werdende Schlinge ist der Beleg für die erfolgreiche Polypektomie, wobei die magnetische Verbindung sofort wieder besteht. Bei einem inkorrekten Anlegen, bei dem die Schlinge initial nicht unmittelbar an die magnetische Verbindungsstelle angelegt werden kann, ist ein Schlingendurchzug nicht möglich, so dass die Schlinge nicht freikommt. Ein erwünschtes Nicht-Hängenbleiben einer Polypektomieschlinge in einem großen, stark gelappten Kopf eines gestielten Polypen kann am besten an einem künstlichen Kopf mit einer vorzugsweise stark übertriebenen, abstrahierten Ausgestaltung des Kopfes, beispielsweise in einer in Fig. 12 dargestellten Form eines Kopfes 49 mit einer bürstenartigen Oberfläche mit langen Fortsätzen bzw. Noppen 47 oder einer auf andere Weise stark zerklüftete Oberfläche, an der die Schlinge leicht hängen bleibt, geübt werden.

Wie in Fig. 9 in schematischer Grundform dargestellt, kann ein gestielter Polyp in seinem Stiel 37 und evtl. zusätzlich in seinem Kopf 41 einen inneren Kanal 39 aufweisen, um eine Blutungs-Läsion zu simulieren. Hierzu kann der Kanal 37 (endständig) verschlossen sein und erst während eines Trainings geöffnet werden. Um wenigstens den Kopf 41 wiederzuverwenden ist zwischen Stiel 37 und Kopf 41 oder innerhalb des Stiels eine in Fig. 9 nicht näher dargestellte Verbindungsstelle (magnetisch, gesteckt, geklebt, genäht, etc.) vorgesehen, an welcher wenigstens der (wiederverwertbare) Kopf 41 zerstörungsfrei vom Rest getrennt werden kann. Soll der Kanal 39 hierbei durch die Verbindungsstelle hindurch führen, sind entsprechende dichtende Verbindungsmaßnahmen vorgesehen.

In einer anderen Ausgestaltung ist der Kanal 37, wie in Fig. 10 und Fig. 11 dargestellt, vorzugsweise (innerhalb des Kopfes 45 im Wesentlichen im rechten Winkel) abgewinkelt und besitzt bereits eine Öffnung 43, aus welcher eine eine Blutung simulierende Flüssigkeit austreten kann. Der Kopf des Polypen 45 zeigt in Fig. 10 und Fig. 11 zur besseren Verdeutlichung eine andere, in diesem Fall flache, tellerförmige Form, wobei selbstverständlich jede beliebige Kopfform denkbar ist. So zeigt Fig. 12 einen bürstenartigen Kopf 49 mit Noppen 47, welcher sowohl für die vorstehend erläuterte magnetische Halterung 31, 33 als auch für die Ausführungsform mit einem - vorzugsweise innenliegenden - Kanal 39 oder für einen elektrochirurgisch durchtrennbaren Stiel verwendet werden kann.

Das in Fig. 13 dargestellte Läsionsmodell in Form eines gestielten Polypen mit schematisch dargestelltem kugelförmigen Kopf 53 weist einen Stiel 37 auf, welcher in eine als Aufnahme 55 dienende Ausnehmung des Kopfes 53 eingesetzt ist (beispielsweise eingeschoben, eingepresst oder eingeklebt). Der Stiel 37 besteht in dieser Ausführungsform aus einem elektrochirurgisch schneidbaren Material, vorzugsweise mit einem innenliegenden Kanal. Nach einem erfolgreichen Durchtrennen des Stiels (Polypektomietraining) und Abtragen des Kopfes 53 mit dem darin befindlichen Stielrest 37 kann dieser vom Kopf 53 ohne Zerstörung des aufwändig gestalteten Kopfes 53 entfernt werden. Hierzu weist diese Ausführungsform einen Kanal mit Öffnung 51 an der Kopfoberfläche auf, der mit der Aufnahme 55 in Verbindung steht. Ein in der Aufnahme verbliebener Stielrest kann so durch Ansetzten von Druckluft, durch Einpressen von Flüssigkeit oder durch Einschieben eines Stäbchens in die Öffnung 51 aus der Aufnahme 55 herausgeblasen, herausgepresst oder geschoben werden.

Zur Befestigung kann der Durchmesser der Aufnahme 55 für den Stiel 37 (aus tierischem Material oder Gummi) beispielsweise auch im gesamten oder einem Teilbereich der Aufnahme 55 kleiner als der Stieldurchmesser ausgebildet sein. Zum Einsetzen des Stiels 37 wird in die Aufnahme 55 beispielsweise eine kurze Rohrhülse mit eingeschobenem Polypenstiel eingesetzt, und dann wird der Stiel 37 während des Zurückziehens der Hülse in die Aufnahme vorgeschoben.

Selbstverständlich ist es auch denkbar, die Ausbildung mit einer Öffnung 51 auch auf andere Kopfformen, wie beispielsweise in Fig. 9 bis Fig. 12 dargestellt, anzuwenden.

Der vorzugsweise innenliegende Kanal 39, welcher selbstverständlich auch verzweigt ausgebildet sein kann, dient in den unterschiedlichen Ausführungsformen von Läsionsmodellen der Simulation einer sogenannten Blutungs-Läsion. Blutungen im GIT können in vivo bei verschiedensten Läsionen vorkommen. Eine Blutung kann spontan auftreten, wenn z.B. ein Blutgefäß in der Wand des GIT platzt. Die Blutungs-Läsion kann aber auch Folge einer Gewebeverletzung sein, beispielsweise durch einen verschluckten Fremdkörper oder eine endoskopische Maßnahme wie Biopsie, Polypektomie etc.

Blutungen können aus dem Randbereich oder dem Grund einer Läsion in Form eines Geschwüres oder einer Tumor-Läsion, aus dem Stiel eines abgetrennten Polypen oder aus der Abtragungsbasis, aus entzündeten Schleimhautarealen usw., auftreten. Zum Erlernen von Blutstillungstechniken am Simulator werden daher erfindungsgemäß die verschiedenen Formen der Blutungs-Läsionen nachgebildet. Diese Nachbildungen/Modelle können aus tierischem und künstlichem Material wie Gummi oder Plastik hergestellt werden.

Bei einer realen endoskopischen Blutstillung wird die Blutungs-Läsion mit dem Endoskop eingestellt. Dann wird an der Läsion das zur Blutstillung verwendete Instrument, eine Lasersonde, Injektionssonde mit blutstillenden Agenzien, Elektrosonde zur Thermokoagulation oder ein Clip eingesetzt. Bei der Clip-Applikation besteht die Schwierigkeit darin, den Clip mit seinen für die Aktion weit geöffneten Branchen zielgenau auf die blutende Stelle, also das eröffnete winzige Blutgefäß, aufzusetzen und durch Schließen der Clip-Branchen (Zuklippen) die Blutung zum Stehen zu bringen. Bei einer Blutung nach Abtragung eines gestielten Polypen, also bei einem Blutaustritt aus dem durch die Polypektomie eröffneten Blutgefäß aus dem der Wand noch anhaftenden Stielrest, kann anstelle der Clip-Applikation die Blutstillung auch durch Ansetzen einer Schlinge, durch welche die Blutung abgedrosselt wird, erfolgen.

Die Blutung aus einer polypoiden Läsion nach einer Polypektomie ist jedoch nicht zwingend. Bei der Polypektomie werden polypoide Läsionen meist unter Anwendung von HF-Strom mit einer Drahtschlinge abgetragen. Durch den über die Schlinge eingeleiteten Strom wird das Gewebe koaguliert ("verkocht") und durchtrennt. Durch die Koagulation werden die Blutgefässe des Polypen "zugeschweißt", so dass es nicht zu einer Blutung kommen muss. Wenn beim Abtragen des Polypen jedoch das Gewebe durchtrennt wird, ohne dass ein ausreichender Koagulationseffekt eingetreten ist, kann es zu einer Blutung aus den nicht verschlossenen Blutgefäßen kommen.

Für die erfindungsgemäße Simulation ist die polypoide Läsion (Fig. 9, Fig. 10 und Fig. 11) bei der Anfertigung aus (tierischem oder künstlichem) elektrisch leitfähigem Material mit einem in seinem Inneren verlaufenden Kanal 39, der ein Blutgefäß simuliert, versehen. Dieser wird an seinem offenen externen Ende 61 mit einem die Blutung simulierenden Medium perfundiert. Die Blutung kann entweder durch Eröffnung des Kanals 39, beispielsweise eine unsachgemäße Polypektomie, ausgelöst werden. Es kann aber auch eine Blutungs-Läsion, wie in Fig. 10 und Fig. 11 dargestellt, mit bereits lumenseitig offenem, (bis zu 90°) abgewinkeltem Kanal bzw. einer Austrittsöffnung 43 verwendet werden. In diesem Fall kann der Trainee ohne eine vorausgehende Aktion (beispielsweise Polypektomie) sofort mit der Blutungsstillungsmaßnahme, insbesondere Setzen eines Clips oder Schlinge, beginnen. Hierzu wird in den Arbeitskanal eines entsprechend (ebenfalls vom Trainee) platzierten Endoskops ein spezielles Werkzeug eingeführt.

Ein (nicht dem Polypektomie-Training dienendes) Blutungs-Läsionsmodell mit einer Austrittsöffnung 43 wird in einen Simulator bzw. in die Organwand 13a eingesetzt und kann dennoch (sogar ohne Änderung des Gesamtmodells, da ein Neueinsetzen des Läsionsmodells nicht erforderlich ist) wiederverwendet werden. Hierzu können die gesetzten Clips oder Schlingen ohne Zerstörung des (aufwändig hergestellten) Läsionsmodells, beispielsweise mit einer (ebenfalls in den Arbeitskanal eingesetzten) Biopsiezange, wieder abgezogen bzw. mit einer endoskopisch einsetzbaren Schere durchtrennt werden. Hierdurch entsteht vorteilhafterweise ein weiterer Übungseffekt, welcher auch in der Realität, beispielsweise bei falsch gesetzten Clips, die behindern, vorkommt. Selbstverständlich ist aber auch das zerstörungsfreie Entnehmen des Läsionsmodells aus der Organwand 13a eines Organstücks möglich, beispielsweise um in ein anderes Organstück eingesetzt zu werden.

Um eine Blutung für einen Trainee zu visualisieren, kann der vorzugsweise innenliegende Kanal 39 mit einer blutsimulierenden Flüssigkeit (Liquoblutung), zum Beispiel Blutkonserven, Blutkörperchenkonserven, koagulierenden Flüssigkeiten (Gerinnungsfaktoren, Gele etc), gefärbten Flüssigkeit, insbesondere rotgefärbtem Wasser, versorgt werden (Pumpe, Infusionsbeutel, etc.). Die Flüssigkeit wird über eine Zuleitung in den Kanal 39 des Läsionsmodells (siehe Fig. 9 bis Fig. 13) eingeleitet und tritt unter den oben genannten Bedingungen aus. Das austretende Blut (kontinuierlich oder pulsierend) veranlasst den Trainee in realitätsnaher Simulation zur blutstillenden Aktion.

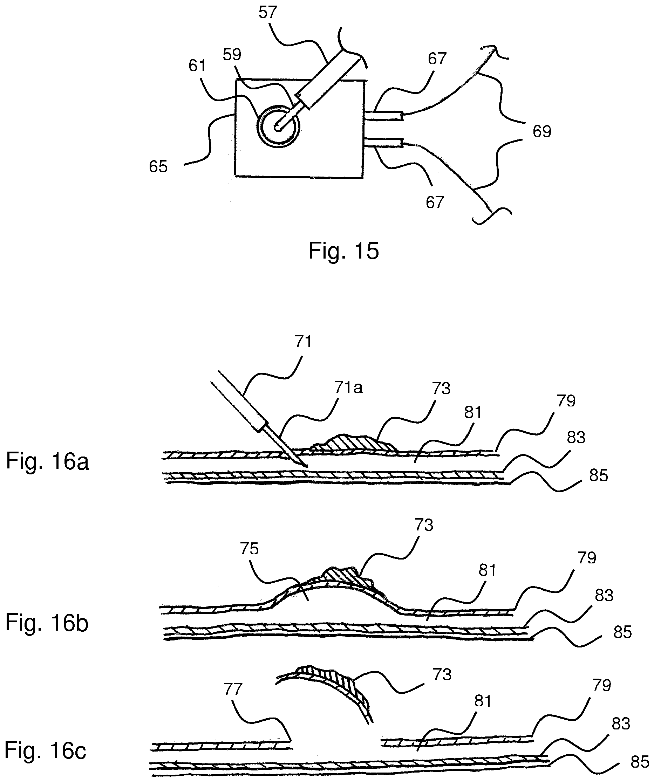

Wie in Fig. 14 und Fig. 15 dargestellt, kann eine Blutung auch elektronisch simuliert werden. Hierzu wird eine außenliegende (nicht lumenseitige) Öffnung 61 des Kanals 39 eines in die Wand 13a eingesetzten (beispielsweise gemäß Fig. 9 bis Fig. 13 ausgebildeten) Blutungs-Läsionsmodells mit einer Zuleitung 57 (direkt oder über einen beispielsweise winkligen Adapter 59) mit einem im Vergleich zum lumenseitig herrschenden Druck eines Gases, insbesondere Umgebungs- bzw. Raumluft, unterschiedlichen Druck versorgt. Die bei einer lumenseitigen Öffnung des Kanals 39 auftretende Druckänderung wird über einen in der Zeichnung nicht näher dargestellten (Druck-)Sensor oder -schalter detektiert, so dass in Abhängigkeit hiervon (beispielsweise mittels einer Auswerte- und Steuereinrichtung) eine entsprechende Alarmaktion ausgelöst wird. Das von einer Quelle, beispielsweise Luftpumpe/Gasflasche, bereitgestellte Gas wird hierzu über den angeschlossenen Druckschalter/-sensor auf einen vorher eingegebenen Druck hin überprüft (mittels einer beispielsweise im Schalter integrierten Auswerteeinrichtung). Bei einer Abweichung vom gewünschten Druck wird ein Schalter (oder eine Steuereinrichtung) betätigt, der den optischen und akustischen Alarm auslöst.

Wie in Fig. 14 und Fig. 15 dargestellt, kann als Alarmaktion eine durch die Optik eines Endoskops direkt lumenseitig sichtbare optische Anzeige ausgelöst werden. Die Anzeige erfolgt hierbei durch ein Leuchtmittel 65, insbesondere eine LED, welche in einer Aufnahme 63a einer Halterung 63 angeordnet ist. Die Halterung 63 dient gleichzeitig der Befestigung des Läsionsmodells bzw. dessen nach außen ragenden Ende des Stiels 37.

Wie ersichtlich, weist die Halterung 63 hierzu eine senkrechte Aufnahme 63b (beispielweise Bohrung) für das äußere Ende des Stiels 37 auf und ist an der Außenseite der Organwand 13a angeordnet (beispielsweise aufgeklebt, genäht, etc.). Die vorzugsweise waagrechte (parallel zur Organwand 13a) Aufnahme 63a reicht mit ihrer Öffnung bis in die Aufnahme 63b, so dass ein in die Aufnahme 63b eingesetztes Leuchtmittel 65 Licht unmittelbar in das Stielende 37 emittiert. Bei einem Auslösen des Blutungsalarms wird auf diese Weise Licht in das Blutungs-Läsionsmodell eingeleitet. Vorteilhafterweise ist das Läsionsmodell aus transparentem, rötlichem Material, z.B. Silikongummi, angefertigt oder besteht wenigstens teilweise aus einem lichtführenden oder lichterzeugendem Material (Kunststofffaser, Glasfaser, lumineszierender Stoff, etc.). Ist der Blutungsalarm ausgelöst, sieht der Endoskopiker im Inneren des GIT eine rot erleuchtete, vorzugsweise blinkende Blutungsquelle. Gleichzeitig kann auch eine außerhalb des Simulators angebrachte Warnlampe die Blutungssituation anzeigen. Wird die "Blutung" gestoppt, beispielsweise durch Setzen eines Clips, wird der Alarm deaktiviert.

Vorzugsweise sind die Gas-/Luftversorgung sowie die Stromversorgung (vorzugsweise Niederspannung) und gegebenenfalls ein Intervallschalter in einer Box angeordnet, so dass der (Trainings-)Simulator samt (Alarm-)Box inkl. Zuleitungen leicht zu transportieren ist. Um auch einen akustischen oder gar olfaktorischen Alarm darzustellen, können stattdessen oder zusätzlich entsprechende Signalgeber (Sirene, Geruchsquelle, Signallampe, etc.) ausgelöst oder angesteuert werden. Diese externen Komponenten können vorzugsweise ebenfalls in der Alarmbox integriert sein, um die Transportabilität des Simulators mit allem Zubehör zu erleichtern,

Mit der vorstehend erläuterten Simulation einer Blutung ("Trockenblutung") - ohne Verwendung von Flüssigkeit - können vorteilhafterweise Verunreinigungen durch aus dem Simulator austretende Flüssigkeit (Flecken bei den beteiligten Personen und auf dem Boden des Übungsraums) vermieden werden. Zudem ist nach der Benutzung keine aufwändige Reinigung des Simulators erforderlich. Bei der Trockenblutung wird Stress beim Endoskopiker nicht wie bei einer realen Blutung durch die rote Farbe des spritzenden Blutes hervorgerufen, sondern durch optische und akustische Signale, die erst aufhören, wenn die blutstillende Maßnahme erfolgreich war.

Mit den erfindungsgemäßen Blutungs-Läsionsmodellen, die selbstverständlich nicht auf die dargestellten Formen beschränkt sind, lassen sich vorteilhafterweise auch folgende in vivo auftretende Blutungs-Läsionen und deren Blutstillung realitätsnah simulieren.

Im Folgenden werden in der Zeichnung nicht näher dargestellte Varianten von Blutungs-Läsionen erläutert. Eine erste Variante simuliert einen flachen Polypen mit Blutung aus dem äußeren Randbereich. Eine zweite Variante simuliert eine Blutung aus dem inneren Randbereich eines Ulkus (Gewebsdefekt), und eine dritte Variante simuliert eine Blutung aus einem Faltenkamm.

### Läsionsmodell mit simulierter Blutung aus dem äußeren Randbereich:

Bei der ersten Variante handelt es sich um eine abstrahierte Läsion, die aus einem Scheibchen aus flexiblem Material (künstlich, Gummi oder tierisch) mit einer oder mehreren Öffnungen im Randbereich besteht. Der für eine Blutungs-Simulation erforderliche Kanal läuft aus dem Lumen des Hohlorgans heraus, beispielsweise durch einen mit dem Scheibchen verbundenen Fortsatz, wo der Kanal für den Endoskopiker unsichtbar an eine Quelle zur Darstellung der Blutung - wie vorstehend erläutet -" angeschlossen wird.

### Blutung aus dem inneren Randbereich:

Bei der zweiten Variante besteht das dazu erforderliche Blutungs-Läsionsmodell aus einer Scheibe - im Unterschied zur ersten Variante - mit einer innen gelegenen Aussparung, die einem Ulkus entspricht. Eine oder mehrere Öffnungen sind im Inneren "Ulkus"-Randbereich der Läsion angebracht. Auch bei dieser Variante erfolgt der Anschluss des Kanals und die Simulation der Blutung wie vorstehend beschrieben. Durch Drehung des Läsionsmodells in der Stielachse kann zudem der Schwierigkeitsgrad des Trainings verändert werden. Hierbei kann die Blutungsöffnung von einer frontalen, endoskopisch einfach angehbaren Position weggedreht werden, bis im Extremfall auf eine dem Endoskop(-kopf) abgewandte Seite.

### Blutung aus einer stegartigen Läsion:

Mit der dritten Variante eines Läsionsmodells sollen beispielsweise Blutungen aus einem Faltenkamm simuliert werden. Die Läsion besteht aus einem flexiblen, senkrecht zur Wand des (Hohl-)Organs stehenden, stegartigen, schmalen Vorsprung mit einer Öffnung für den "Blut"austritt auf der Schmalseite oder nahe der oberen, lumenseitigen Seite des Steges. Auch bei dieser Variante erfolgt der Anschluss des Kanals und die Simulation der Blutung wie vorstehend beschrieben. Je nach Zugriffswinkel zur Clipsetzung ist die Aktion einfach (bei recht-, stumpfwinkeligem Zugang) oder erschwert bis unmöglich (bei tangentialem Zugang).

Mit den erfindungsgemäßen Blutungs-Läsionsmodellen lassen sich vorteilhafterweise auch tangentiale/spitzwinkelige Clipapplikationen (Blutstillung bei tangentialem/spitzwinkeligem Zugang) simulieren, welche im Unterschied zu einer möglichst rechtwinkeligen oder zumindest stumpfwinkeligen Clipapplikation an den Endoskopiker eine erhöhte Anforderung stellen.

Da sowohl für die "Trockenblutung" als auch die Verwendung von Flüssigkeit ("Liquoblutung") einen Kanal erfordern, sind grundsätzliche alle Läsionsmodelle mit einem, vorzugsweise innenliegenden, Kanal für beide Simulationen geeignet.

Wie bereits anhand der vorstehend genannten Ausführungsformen von Läsionsmodellen gezeigt, können die Läsionsmodelle auch aus zwei oder mehreren Komponenten bestehen oder aufgebaut sein. Insbesondere die Anfertigung und Verwendung eines gestielten polypoiden Läsionsmodells kann vereinfacht werden, wenn Kopf und Stiel getrennt hergestellt und erst dann zusammengesetzt werden (beispielsweise erst für das Endoskopietraining).

Die einzelnen Komponenten eines Läsionsmodells können aus dem gleichen Material oder aus verschiedenen Materialien bestehen. Beispielsweise kann ein Kopf mit bürstenartiger Oberfläche, wie in Fig. 12 dargestellt, aus tierischem Material nicht oder nur sehr schwer hergestellt werden. Die Herstellung aus einem gießbaren, robusten Material (z.B. Gummi, Kunststoff) ist dagegen leicht. Zudem ist die Anfertigung aus robustem Material bei den Versuchen, die Schlinge anzulegen, weniger verletzlich und muss beim Training nicht immer wieder ausgetauscht werden. Der Stiel, der zur Durchführung einer Polypektomie durch Diathermie (Anwendung von Hochfrequenz-Strom) aus leitfähigem, vorzugsweise tierischem Material, angefertigt wird, kann auf diese Weise mit einem robusten, nicht leitfähigen Kopf kombiniert werden.

Bei dem bevorzugten aus mehreren Komponenten bestehenden Läsionsmodell (Fig. 8, Fig. 12, Fig. 13) ist der Kopf 35, 49, 53 aus gummielastischem Material oder Kunststoff oder hartem Material hergestellt.

Die Verbindung der Komponenten kann, wie vorstehend erläutert, auf verschiedene Weise erfolgen (geklebt oder magnetisch oder durch Klemmung des Stiels im Kopf), wobei auch Mischformen innerhalb eines Modells denkbar sind.

Die in Fig. 16a bis Fig. 16c dargestellte Ausführungsform eines erfindungsgemäßen Läsionsmodells stellt eine Simulation eines flachen, sessilen Polypen 73 bzw. dessen Abtragung dar. Dieses Läsionsmodell 73 kann als kleine flache Scheibe aus tierischem Material oder einem anderen geeigneten Material (Gummi, Kunststoff) angefertigt werden. Dieses Läsionsmodell 73 ist mit Kleber auf der Mukosa eines Organs aus elektrochirurgisch schneidbarem, vorzugsweise tierischem, Material angebracht. Wie in der Realität können mit diesem Modell sogar spezielle Techniken, wie das Unterspritzen des Polypen vor der Abtragung, geübt werden, um das Risiko einer Perforation der dünnen Organwand zu vermindern. Hierzu wird, wie in Fig. 16a dargestellt, zunächst eine Sonde 71 mit endständiger Kanüle 71a in flachem Winkel in die poylypentragende Wand (Mukosa 79) unterhalb des Polypen in die Submukosa 81 eingestochen. Dann wird Flüssigkeit, z.B. Kochsalzlösung, injiziert, bis sich der Polyp von den tiefer liegenden Schichten der Organwand, wie in Fig. 16. b dargestellt, abhebt. Zwischen dem abzutragenden Polypen und den tiefer liegenden Schichten der Organwand, Muskularis 83, Serosa 85, liegt nun ein Flüssigkeitspolster 75, welches das Risiko einer Perforation der Organwand vermindert.

Die Abtragung des Polypen 73 erfolgt wiederum elektrochirurgisch mit einer Polypektomieschlinge, wie es bereits anhand anderer Läsionsmodelle bzw. deren Abtragung vorstehend beschrieben wurde. In der Organwand entsteht hierdurch nur an der obersten Schicht (Mukosa) 79 eine umlaufende Schnittkante 77, und der Polyp 73 mit der in diesem Bereich an seiner Unterseite klebenden Schicht liegt frei. Das aufwändig hergestellte Modell des Polypen 73 kann mit oder ohne diese Schicht (eventuelles Lösen der geklebten Schicht von der Unterseite des Polypen 73) wieder lumenseitig in ein Organstück 13 eingeklebt und auf diese Weise wiederverwendet werden. Selbstverständlich kann der Polyp 73 bzw. das Läsionsmodell auch ohne vorausgehende Unterspritzung diathermisch abgetragen werden.

Für das Training dieser Abtragunstechnik geeignete Polypen können auch als Mehrkomponentenläsionen ausgebildet sein. Der Kopf bzw. die Kopfkomponente wird dabei ohne (eingesetzten) Stiel direkt auf der Organwand 79 oder einem Teil davon befestigt. Der flache/sessile Kopf 73 kann aus künstlichem oder aus tierischem Material angefertigt sein. Der Teil der Organwand, beispielsweise 5x5 cm groß, von welcher der Polyp abgetragen werden soll, kann aus tierischem Material, z.B. Tierdarm oder -magen, oder anderem elektrisch leitfähigem Material bestehen.

Wie vorstehend anhand der Ausführungsbeispiele erläutert, handelt es sich bei den erfindungsgemäßen Läsionsmodellen in jeder beschriebenen Ausgestaltung um einzelne, voneinander unabhängige Varianten, welche jedoch durchaus auch in beliebiger Kombination miteinander kombiniert werden können. In jedem Fall ist die Wiederverwendbarkeit wenigstens eines Teils des Läsionsmodells, insbesondere dessen aufwändig gestalteten Kopfbereiches (Gummi, Kunststoff) gewährleistet.

Beim Endoskopie-Training können die Läsionsmodelle daher sehr oft verwendet werden, ohne dass sie durch (komplett) neue Läsionsmodelle ersetzt werden müssen. Hierdurch können auf Dauer Kosten (Herstellung und Installation) minimiert werden. Zudem werden bei einem nicht anfallenden Austausch gebrauchter Läsionen (Modelle mit Magnetsystem, Modelle für die Blutungsstillungsmaßnahme) Verzögerungen bei der ohnehin knappen Trainingszeit der Kursteilnehmer vermieden.

Bei dem vorstehend beschriebenen Simulator handelt es sich um einen vorteilhafterweise aus künstlichen Materialien, wie beispielsweise Metall, Kunststoff und Gummi, hergestellten Simulator (Gruppe "mechanische Simulatoren"), bei dem allenfalls einige Läsionsmodelle bzw. Komponenten hiervon aus tierischem, im Handel erhältlichem Material hergestellt werden. Selbstverständlich ist es aber auch denkbar, tatsächliche Organabschnitte, z.B. tierische Darmstücke, einzusetzen. Das erfindungsgemäße Trainingsmodell bzw. der Simulator kann in modifizierten Varianten als Trainingsgerät sowohl für Humanmediziner als auch für Tierärzte verwendet werden.

### Bezugszeichenliste

- L: Längsachse des Gehäuses
- 1: Halterung (waagrechte)
- 3: Intubationstubus
- 5: Ständer (senkrechter)
- 7: Stutzen
- 9: Schraubdeckel
- 11: Organhalterung
- 13: Organstück (Gummi, Silikon, tierisches Material, etc.)
- 13a: Organwand des Organstücks
- 15: Dose
- 17: Magnet
- 19: Halterung (für den Magneten 17)
- 19a: flanschartiger Teil der Halterung
- 21: Kugel (aus Metall oder magnetisch anziehbarem Material)
- 23: flache/sessile polypoide Läsion
- 25: Magnet
- 25a: Magnetunterseite mit Abstandshalter
- 27: Stielteil (zur Organwand gerichtet)
- 29: Stielteil (zum Kopf gerichtet)
- 31: Magnet in 27 integriert
- 33: Magnet in 29 integriert
- 35: Kopf
- 37: (Polypen-)Stiel mit vorzugsweise innenliegendem Kanal (z.B. aus tierischem Material wie Wurmstück)
- 39: innenliegender Kanal
- 41: Kopf (kugelförmiger)
- 43: Austrittsöffnung
- 45: Kopf (tellerförmiger)
- 47: Noppen
- 49: Kopf mit Noppen
- 51: zweite Öffnung (für luftzuführendes Gerät)
- 53: aufgesetzter Kopf (kugelförmig z.B. aus Gummi))
- 55: Aufnahme für Stiel
- 57: Zuführung/Leitung für Gas, insbesondere (Raum-)Luft
- 59: Winkelstück bzw. winkliger Adapter
- 61: Stielende mit Öffnung/Zugang des innenliegenden Kanals 39
- 63: Halterung
- 63a: (waagrechte) Aufnahme für LED
- 63b: (senkrechte) Aufnahme Stiel
- 65: LED
- 67: LED-Pins (Anschlussstifte)
- 69: Anschlussleitung
- 71: Sonde
- 71a: endständige Kanüle
- 73: Polyp (flach/sessil)
- 75: Polster (gefüllt mit Flüssigkeit, insbesondere Kochsalzlösung)
- 77: Schnittkante
- 79: Mukosa
- 81: Submukosa
- 83: Muskularis
- 85: Serosa
- A-A': Schnittlinie in Fig. 5

## Patentansprüche

1. Modell einer Läsion zum Einsatz in einem Trainingsmodell für eine Untersuchung und/oder Behandlung von Läsionen im Gastrointestinaltrakt,
wobei
das Läsionsmodell wenigstens einen Kopfbereich (21, 23, 35, 41, 45, 49, 53, 73) aufweist, der derart ausgebildet ist, dass er nach Durchführung eines Untersuchungs- und/oder Behandlungstrainings wiederverwendet werden kann und
**dadurch gekennzeichnet, dass**
das Läsionsmodell eine magnetische oder magnetisierbare Halterung (21, 25) aufweist, um am Inneren eines Bereiches (13), welcher im Inneren wenigstens einem Abschnitt eines Verdauungstraktes entspricht oder nachgebildet ist, magnetisch gehaltert zu werden, so dass das Trennen der Magnetverbindung mit einem entsprechenden Werkzeug erfolgen kann,

2. Modell nach Anspruch 1, **dadurch gekennzeichnet, dass** das Läsionsmodell aus wenigstens zwei magnetisch aneinander gehalterten Komponenten (31, 33) besteht.

3. Modell nach Anspruch 1 oder 2, **dadurch gekennzeichnet, dass** das Läsionsmodell zumindest zu einem Teil aus einem formstabilen Material besteht.

4. Modell nach einem der vorhergehenden Ansprüche, **dadurch gekennzeichnet, dass** zumindest der Kopfbereich (21, 23, 35, 41, 45, 49, 53, 73) des Läsionsmodells aus Kunststoff oder Gummi besteht.

5. Modell nach einem der vorhergehenden Ansprüche, **dadurch gekennzeichnet, dass** das Läsionsmodell wenigstens einen an dem Läsionsmodell angeordneten oder innenliegenden Kanal (39) aufweist.

6. Modell nach einem der vorhergehenden Ansprüche, **dadurch gekennzeichnet, dass** an oder in dem Läsionsmodell ein Leuchtmittel (65) oder eine lichtführende Einrichtung angeordnet ist, so dass emittiertes Licht für eine Übungsperson durch die Optik des Endoskops im Bereich des Läsionsmodells wahrnehmbar ist.

7. Modell nach einem der vorhergehenden Ansprüche, **dadurch gekennzeichnet, dass** das Läsionsmodell aus mehreren Komponenten aufgebaut ist.

8. Modell nach einem der vorhergehenden Ansprüche, **dadurch gekennzeichnet, dass** das Läsionsmodell zumindest in einem Teilbereich einen wärmeindizierenden Stoff aufweist.

9. Verwendung wenigstens eines Läsionsmodells nach einem der vorhergehenden Ansprüche in einem Modell zum Trainieren einer Untersuchung und/oder Behandlung von Läsionen im Gastrointestinaltrakt, welches einen Bereich (13) aufweist, welcher im Inneren wenigstens einem Abschnitt eines Verdauungstraktes entspricht oder nachgebildet ist, so dass ein Einführen eines Endoskops von einer Übungsperson und Untersuchungs- und/oder Behandlungsmethoden von Läsionen trainiert werden können.

10. Verwendung nach Anspruch 9, **dadurch gekennzeichnet, dass** außen am Bereich (13) oder dem wenigstens einen Läsionsmodell oder in dem Bereich (13) oder in dem wenigstens einen Läsionsmodell ein Leuchtmittel (65) oder eine lichtführende Einrichtung angeordnet ist, so dass emittiertes Licht für eine Übungsperson durch die Optik des Endoskops im Bereich des Läsionsmodells wahrnehmbar ist.

11. Verwendung nach Anspruch 9 oder 10, **dadurch gekennzeichnet, dass** das wenigstens eine Läsionsmodell magnetisch am Inneren des Bereiches (13) gehaltert ist

12. Verwendung nach einem der Ansprüche 9 bis 11, **dadurch gekennzeichnet, dass** das wenigstens eine Läsionsmodell aus wenigstens zwei magnetisch aneinander gehalterten Komponenten (31, 33) besteht.

13. Verwendung nach einem der Ansprüche 9 bis 12, **dadurch gekennzeichnet, dass** das Trainingsmodell eine Hülle (15) aufweist, welche den Bereich (13) flüssigkeitsdicht oder luftdicht umschließt.

## Claims

1. A model of a lesion for use in a training model for examination and/or treatment of lesions in the gastrointestinal tract,
wherein the lesion model has at least one head region (21, 23, 35, 41, 45, 49, 53, 73) which is formed in such a way that it can be reused after examination training and/or treatment training has been carried out, and
**characterised in that**
the lesion model has a magnetic or magnetizable holder (21, 25) in order to be held magnetically at the interior of a region (13), which in the interior corresponds to or reproduces at least one section of a digestive tract, so that separation of the magnetic connection can be effected with a corresponding tool.

2. A model according to claim 1, **characterised in that** the lesion model consists of at least two components (31, 33) held together magnetically.

3. A model according to claim 1 or 2, **characterised in that** the lesion model consists at least in part of a dimensionally stable material.

4. A model according to one of the preceding claims,
**characterised in that** at least the head region (21, 23, 35, 41, 45, 49, 53, 73) of the lesion model consists of plastics material or rubber.

5. A model according to one of the preceding claims,
**characterised in that** the lesion model has at least one channel (39) which is arranged on the lesion model or lies inside.

6. A model according to one of the preceding claims,
**characterised in that** an illuminant (65) or a light-guiding device is arranged on or in the lesion model so that light that is emitted for a trainee can be perceived through the optics of the endoscope in the region of the lesion model.

7. A model according to one of the preceding claims,
**characterised in that** the lesion model is constructed of a plurality of components.

8. A model according to one of the preceding claims,
**characterised in that** the lesion model has a heat-indicating substance at least in a partial region.

9. Use of at least one lesion model according to one of the preceding claims in a model for training for examination and/or treatment of lesions in the gastrointestinal tract that has a region (13) which in the interior corresponds to or reproduces at least one section of a digestive tract so that it is possible to train a trainee in the introduction of an endoscope and in methods for the examination and/or treatment of lesions.

10. Use according to claim 9, **characterised in that** an illuminant (65) or a light-guiding device is arranged externally at the region (13) or the at least one lesion model or in the region (13) or in the at least one lesion model so that light that is emitted for a trainee can be perceived through the optics of the endoscope in the region of the lesion model.

11. Use according to claim 9 or 10, **characterised in that** the at least one lesion model is held magnetically at the interior of the region (13).

12. Use according to one of claims 9 to 11, **characterised in that** the least one lesion model consists of at least two components (31, 33) that are held together magnetically.

13. Use according to one of claims 9 to 12, **characterised in that** the training model has a cover (15) which surrounds the region (13) in a liquid-tight or airtight manner.

## Revendications

1. Modèle d'une lésion destiné à être utilisé dans un modèle d'entraînement pour un examen et/ou un traitement de lésions dans le tract gastro-intestinal,
dans lequel
le modèle de lésion présente au moins une zone de tête (21, 23, 35, 41, 45, 49, 53, 73), qui est réalisée de telle manière qu'elle peut être réutilisée après la réalisation d'un entraînement d'examen et/ou de traitement, et
**caractérisé en ce que**
le modèle de lésion présente une fixation (21, 25) aimantée ou pouvant être aimantée afin d'être maintenu de manière aimantée au niveau de l'intérieur d'une zone (13), qui correspond à l'intérieur d'au moins un tronçon d'un tract digestif ou qui le reproduit si bien que la coupure de la liaison aimantée peut être effectuée à l'aide d'un outil correspondant.

2. Modèle selon la revendication 1, **caractérisé en ce que** le modèle de lésion est constitué d'au moins deux composants (31, 33) maintenus l'un contre l'autre de manière aimantée.

3. Modèle selon la revendication 1 ou 2, **caractérisé en ce que** le modèle de lésion est constitué au moins en partie d'un matériau à forme stable.

4. Modèle selon l'une quelconque des revendications précédentes, **caractérisé en ce qu'**au moins la zone de tête (21, 23, 35, 41, 45, 49, 53, 73) du modèle de lésion est constituée de matière plastique ou de caoutchouc.

5. Modèle selon l'une quelconque des revendications précédentes, **caractérisé en ce que** le modèle de lésion présente au moins un canal (39) disposé au niveau du modèle de lésion ou situé à l'intérieur.

6. Modèle selon l'une quelconque des revendications précédentes, **caractérisé en ce qu'**un moyen luminescent (65) ou un dispositif de guidage de lumière est disposé au niveau du modèle de lésion ou dans ce dernier si bien que la lumière émise pour une personne s'exerçant peut être perçue par l'optique de l'endoscope dans la zone du modèle de lésion.

7. Modèle selon l'une quelconque des revendications précédentes, **caractérisé en ce que** le modèle de lésion est élaboré à partir de plusieurs composants.

8. Modèle selon l'une quelconque des revendications précédentes, **caractérisé en ce que** le modèle de lésion présente, au moins dans une zone partielle, une matière indiquant la chaleur.

9. Utilisation d'au moins un modèle de lésion selon l'une quelconque des revendications précédentes dans un modèle d'entraînement d'un examen et/ou d'un traitement de lésions dans le tract gastro-intestinal, qui présente une zone (13), qui correspond à l'intérieur d'au moins un tronçon d'un tract digestif ou qui le reproduit si bien qu'une introduction d'un endoscope par une personne s'exerçant et des méthodes d'examen et/ou de traitement peuvent être pratiquées à des fins d'entraînement.

10. Utilisation selon la revendication 9, **caractérisée en ce qu'**un moyen luminescent (65) ou un dispositif de guidage de lumière est disposé à l'extérieur au niveau de la zone (13) ou de l'au moins un modèle de lésion ou dans la zone (13) ou dans l'au moins un modèle de lésion si bien que la lumière émise pour une personne s'exerçant peut être perçue par l'optique de l'endoscope dans la zone du modèle de lésion.

11. Utilisation selon la revendication 9 ou 10, **caractérisée en ce que** l'au moins un modèle de lésion est maintenu de manière aimantée au niveau de l'intérieur de la zone (13).

12. Utilisation selon l'une quelconque des revendications 9 à 11, **caractérisée en ce que** l'au moins un modèle de lésion est constitué d'au moins deux composants (31, 33) fixés l'un contre l'autre de manière aimantée.

13. Utilisation selon l'une quelconque des revendications 9 à 12, **caractérisée en ce que** le modèle d'entraînement présente une enveloppe (15), qui renferme la zone (13) de manière étanche aux fluides ou de manière étanche à l'air.
